# EUROPÄISCHE PATENTSCHRIFT

(11) **EP 0 572 071 B1**
(45) Veröffentlichungstag und Bekanntmachung des Hinweises auf die Patenterteilung: **14.08.1996**
(21) Anmeldenummer: 93201439.2
(22) Anmeldetag: 19.05.1993
(51) Int. Cl.: G01F 23/54, G01F 23/52

(54) **Vorrichtung zur Anzeige des Tankfüllstands, insbesondere eines Kfz-Tanks**
Device for indicating level in a tank, in particular an automobile tank
Dispositif pour l'indication du niveau dans un réservoir, en particulier un réservoir d'une voiture automobile

(30) Priorität: 25.05.1992 IT MI920527; 15.12.1992 IT MI921062
(43) Veröffentlichungstag der Anmeldung: 01.12.1993
(73) Patentinhaber: BITRON S.p.A., I-10064 Pinerolo (Torino) (IT)
(72) Erfinder: Bianco, Giovanni, I-17045 Legino, Savona (IT)
(74) Vertreter: Fusina, Gerolamo

(56) Entgegenhaltungen:
- EP-A- 0 319 826
- DE-C- 572 429
- GB-A- 577 193
- GB-A- 2 191 297
- PATENT ABSTRACTS OF JAPAN vol. 5, no. 196 (P-93)(868) 12 December 1981 & JP-A-56 119 802 ( SHIN NIPPON DENKI )
- IT patent 1211578

## Beschreibung

The application relates to a device for indicating the level of liquid in a tank.

A device for this purpose of the type having the features of the preamble of claim 1 is known from GB-A-577193.

It is also known, from e.g. GB-A-2191297, to deal with the problem of fuel tank deformation resulting in a changes in the position of the fuel tank base, by provision, in a level gauge of the float type, of a telescopic housing.

The invention seeks to provide an improved apparatus of the type referred to above, providing an improved telescopic facility and linkage structure.

This object is achieved by the device as defined in claim 1.
Figure 1 is a schematic diagram of a level indicating device and is shown partly in block form and partly in section, the sectional part being taken on the line I-I of Figure 2;
Figure 2 is a section through a part of the device of Figure 1,
Figure 3 is a section on the line III-III of Figure 2;
Figure 4 is a section through a first embodiment of the invention; and
Figure 5 is a section through a second embodiment of the invention.

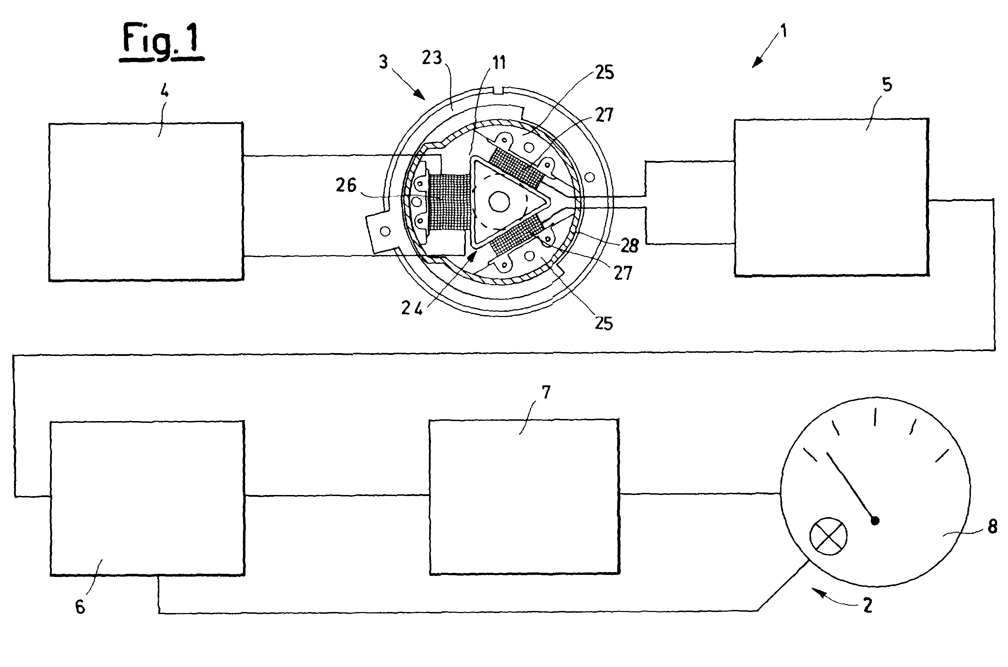

With reference to said figures 1-3, this level indicating device is described for explanating purposes. The device is indicated overall by 1 and comprises an electronic circuit 2 and a probe 3. The electronic circuit 2 comprises substantially a sinusoidal current generator 4, a synchronous demodulator 5, a circuit 6 for correcting for the shape of the tank, a variable transductor 7 and an indicator 8 which can be of digital or analog type.

The structure of this circuit is described in greater detail in Italian patent No. 1,211,578, (see also EP-A-0 319 826).

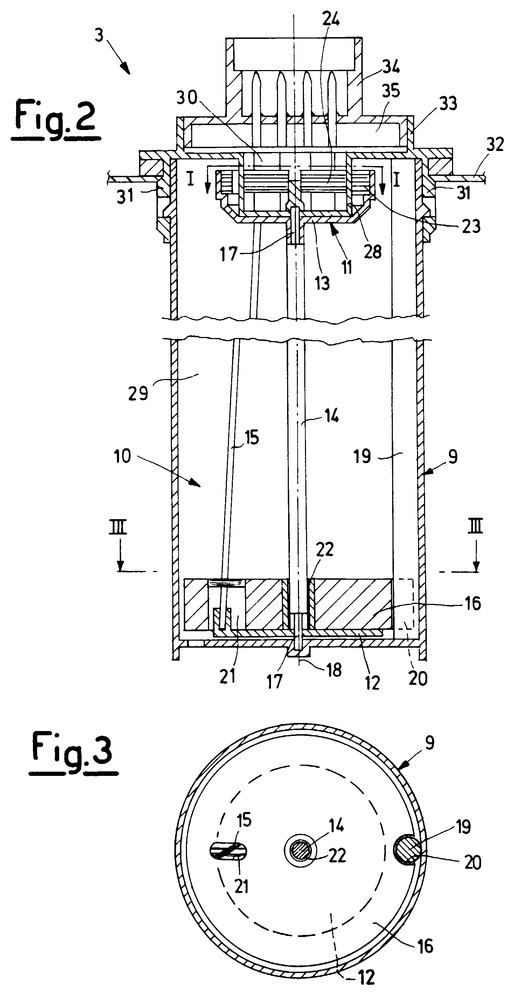

The probe 3 (Figure 2) comprises a preferably cylindrical casing 9 housing a linkage 10, an angular movement sensor 11 and said electronic circuit 2 with the exception of the indicator 8, which is remotely situated on the automobile dash panel.

The linkage 10 comprises a first disc 12 and a cup-like member 13, a shaft 14, a rod 15, a float 16 and at least one guide 19. The first disc 12 and the cup-like member 13 are keyed centrally onto the shaft 14, which can rotate on journals 17 about a vertical axis 18.

The rod 15 is also rigidly connected to the member 12 and 13 but extends along an axis which is skew to the axis 18, or which forms a helix about this latter. The float 16 comprises a radial groove 20, a slot 21 and a hole 22. The groove 20 is engaged by the guide 19, the slot 21 being traversed by the rod 15 and the hole 22 being traversed by the mechanical shaft 14.

The disc 12 is flat, and when the tank is completely empty the float 16 rests on it. The member 13 is concave and houses in its interior the rotor 23 of the angular movement sensor 11.

The angular movement sensor 11 comprises the said rotor 23 and a stator 24, plus an air gap 28.

The rotor 23 is formed from one lamination pack. The stator 24 is formed from two lamination packs 25, a primary winding 26 and two secondary windings 27.

The lamination packs 25 and the windings all lie at 120° to each other.

The air gap 28 is a wall of insulating material which divides the casing 9 into a first part 29 and a second part 30 which are sealed from each other. The first part 29 contains the linkage 10 and rotor 23, whereas the second part 30 contains the stator 24. The second part 30 could also contain the whole or part of the electronic circuit 2.

This latter situation could apply in the case in which the device 1 is fitted into the tank filler cap.

In the case illustrated. the air gap or sealing wall 28 extends to the outside of the casing 9, to which it is fixed by snap-fitting means or clips 31. On this wall there can also be provided the means (flanges or the like) for fixing the probe to the upper wall 32 of the tank.

In the illustrated embodiment, on the sealing wall 28 acting as the air gap there is provided a flange 33 by which a connector 34 can be fixed to said wall to seal the second part 30, the container comprising a housing 35 containing under sealed conditions the electronic circuit 2, usually with the exception of the indicator 8 for reasons of convenience.

The operation is as follows:

When the tank is completely empty the probe 3 assumes the configuration shown in Figure 2. As the tank is progressively filled the fuel penetrates into the casing 9 through the holes 36, the float 16 being urged upwards to follow the liquid surface. As the float progressively rises it acts on the rod 15 which, being skew, moves about the mechanical shaft 14, which rotates about the axis 18. The linkage 10 consequently converts the movement of the float 16 along the vertical axis 18 into an angular rotation about said vertical axis 18.

The rotor 23 therefore rotates about the axis 18 and hence relative to the stator 24.

The movement sensor 11 therefore emits a signal which is proportional to the said angular rotation, which itself is proportional to the liquid level in the tank.

The electronic circuit 2 processes the data received from the sensor 11 and displays the result by means of the indicator 8.

In a device such as that illustrated the fact of making the air gap 28 in the form of a sealed wall prevents the delicate electrical parts having to operate under immersed conditions or subjected to splashes or vapour from the liquid of which the device measures the level. The tubular structure of the cylindrical casing 9 for the probe 3, which is mounted on the upper wall 32 of the tank and extends throughout the entire height of the tank, enables one and the same device 1 to be easily adapted to different tanks by merely replacing or adjusting the shape corrector circuit 6.

The device described with reference to Figures 1-3 has been formed on the assumption that the tanks are substantially undeformable under the stresses due to the internal pressure generated by the gas which forms and remains trapped within the tank by fuel evaporation, or due to the fuel weight. This is correct in the case of metal tanks, but is no longer so in the case of plastics tanks which have been recently introduced into automobiles.

In this case the tank deformation results substantially in a change in the position of the tank base wall relative to the upper wall to which the device is fixed. The result of this is that although the device operates correctly, it becomes inaccurate.

This inaccuracy increases the more the free surface of the fuel approaches the bottom of the tank, which is precisely the situation in which maximum accuracy is required because of the small fuel quantity present in the tank in such a situation.

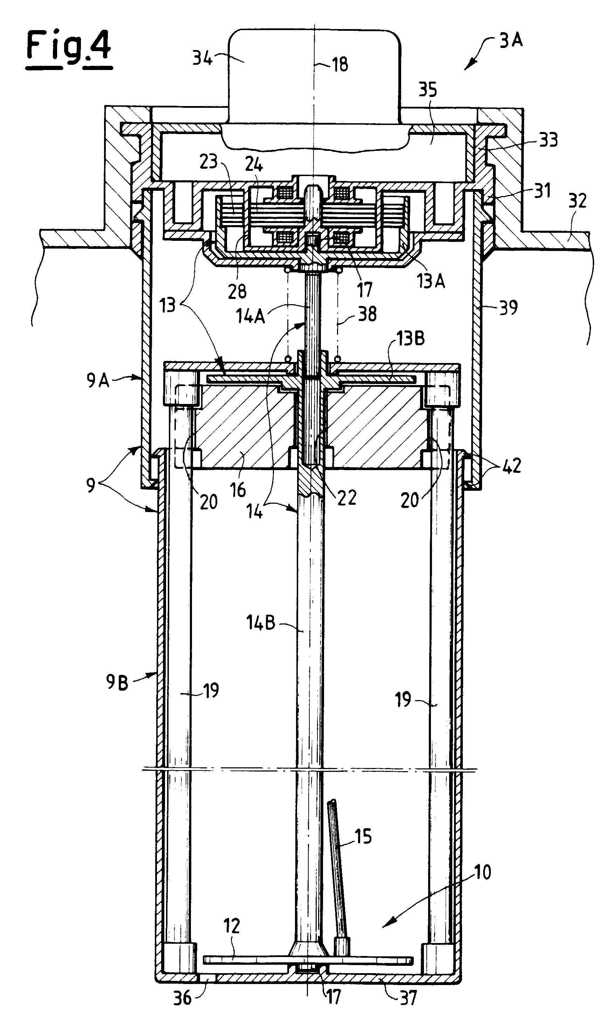

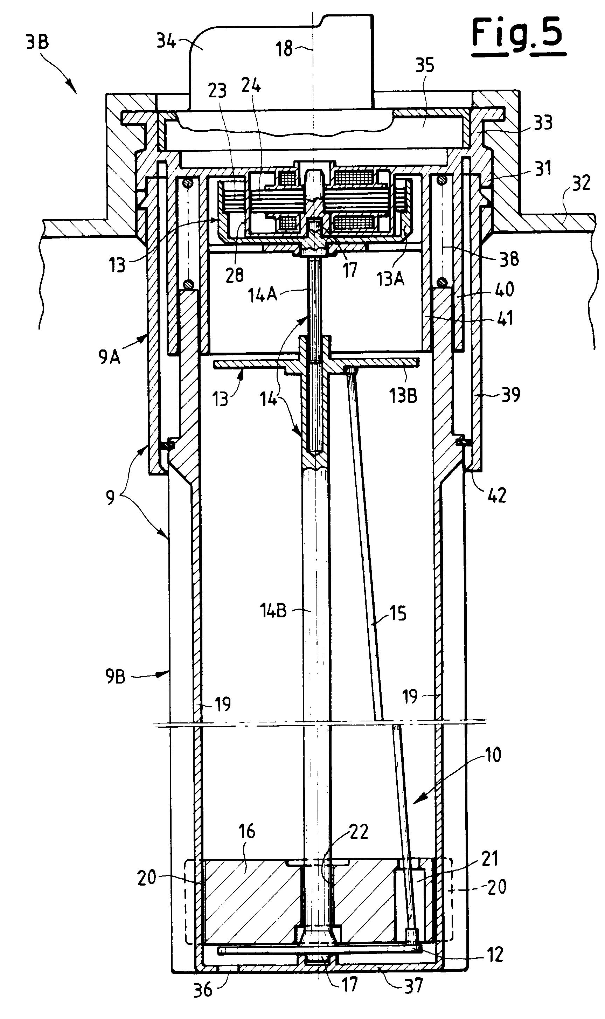

To overcome this drawback the probes of Figures 4 and 5 have been conceived, which in addition to solving the technical problem solved by the probe of Figure 1 also solve this latter drawback.

Substantially, the probe 3 differs from the probes 3A and 3B in that these latter have a telescopic casing 9 and mechanical shaft 14, and instead of the cup-like member 13 two parts 13A and 13B are provided. The first cup-like part 13A supports the rotor 23 and is keyed onto the first part 14A of the shaft 14, whereas the second disc-shaped part 13B is keyed onto the second part 14B of the shaft and one of the two ends of the rod 15 is fixed to it. Preferably the first part 14A of the shaft 14 has a splined profile to slide within a conjugate profile in the second part 14B of the shaft 14. The cylindrical casing 9 comprises a first part 9A and a second part 9B. The part 9A is the upper part and is intended to be secured to the upper wall of the tank 32, and can consequently be considered fixed.

The part 9A also forms a guide element for the part 9B which slides along the axis 18, preferably within the part 9A.

The average total length of the probe 9 is equal to the depth of the tank for which it is intended. In this manner the base wall 37 of the casing 9 rests on the tank base wall (not shown). If the tank base wall moves further from its upper wall because of deformation, the base wall 37 of the probes 3A and 3B always remains in contact with the tank base wall merely by the effect of gravity. In this manner the float 16 and consequently the position sensor 11 always assumes the same reference position relative to the tank base independently of the distance at that moment between the tank base wall and upper wall, ie the instantaneous depth of the tank.

However, to ensure immediate adaptation of the probes 3A and 3B to the tank depth, a preloaded elastic element, which in the illustrated embodiment is a helical spring 38, can be provided between the telescopic elements. With the probe 3A the helical spring 38 uses the shaft 14 as its guide element. The first part 9A comprises a wall 39 acting as the guide for the open upper end of the second part 9B of the casing 9.

In contrast, with the probe 3B the helical spring 38 lies between the two further cylindrical walls, namely a second 40 and a third 41, also forming a constituent part of the second part 9B. The open upper end of the second part 9B slides between the second cylindrical wall 39 and the third 40 and is simultaneously guided by the first wall 39. Such a structure makes the probe robust and/or insensitive to the jolting to which it is subjected during vehicle travel, especially when the telescopic extension is at its maximum.

To prevent the first part 9A separating from the second part 9B under such conditions, retention means 42 are provided between said two parts. Both for the probe 3A and for the probe 3B these means comprise opposing annular projections which by mutual cooperation between undercut and/or inclined surfaces enable the element 9A to be easily mounted over the element 9B but prevent its subsequent disengagement.

## Patentansprüche

1. Vorrichtung (1) zum Anzeigen des Flüssigkeitsstandes in einem Tank, insbesondere einem Kraftfahrzeugtank, mit:
• einem Gehäuse (9), das eine senkrechte Welle (14), einen mit einem Loch versehenen Schwimmer (16), wodurch der Schwimmer an der Welle gleitfähig angebracht ist, und ein Gestänge (10) enthält, um eine Bewegung des Schwimmers (16) entlang einer senkrechten Achse (18) in eine Winkeldrehung der Welle (14) um die senkrechte Achse (18) umzuwandeln;
• einem Winkelbewegungssensor (11), um ein die Winkeldrehung darstellendes elektrisches Signal auszusenden, wobei der Sensor einen magnetischen Winkelstellungs-Umformer mit einem Rotor (23) und einem Stator (24) aufweist, in welchem der Rotor (23) durch das Gestänge (10) bewegt wird, um sich um die senkrechte Achse (18) zu drehen;
• einer Wand (28) aus Isoliermaterial, die im Luftspalt zwischen dem Rotor (23) und dem Stator (24) angeordnet ist, worin die Wand (28) den Teil (29) des Gehäuses, der das Gestänge (10) und den Rotor (23) enthält, von dem Teil (30) abdichtend trennt, der den Stator (24) und eine elektronische Schaltung (2) enthält, welche die von dem Winkelbewegungssensor (11) empfangenen Daten verarbeitet und die Ergebnisse anzeigt, dadurch gekennzeichnet, daß das Gehäuse (9) und die Welle (14) teleskopisch gestaltet sind, indem:
• die Welle (14) einen ersten (14A) und einen zweiten (14B) Teil aufweist, wobei der erste Teil vermöge eines Vielnutprofils innerhalb des zweiten Teils entlang der Achse (18) gleitfähig ist; und indem
• das Gehäuse (9) einen ersten Teil (9A) und einen innerhalb des ersten Teils gleitfähigen zweiten Teil (9B) aufweist;
• worin der erste Teil (9A) des Gehäuses (9):
- den Winkelbewegungssensor (11) und ein schalenartiges Bauteil (13A) aufnimmt, das den Rotor (23) trägt und mit dem ersten Teil (14A) der Welle (14) verkeilt ist;
- als ein Führungselement für den zweiten Teil (9B) des Gehäuses (9) dient, der entlang der senkrechten Achse (18) gleitet,
- an der oberen Wand des Tanks (32) befestigt werden kann,
• worin der zweite Teil (9B) des Gehäuses (9) aufnimmt:
- den zweiten Teil (14B) der Welle (14), an dem eine erste Scheibe (12) und eine zweite Scheibe (13B) gelagert sind;
- das Gestänge (10), das eine Stange (15) in Form einer Wendel um die senkrechte Achse (18) aufweist und dessen Enden mit der ersten Scheibe (12) und der zweiten Scheibe (13B) starr verbunden sind; und
- den Schwimmer (16), der mit einer radialen Rille (20) und einem Schlitz (21) versehen ist, worin die Rille (20) mit einer am zweiten Teil (9B) des Gehäuses (9) befestigten Führung (19) in Eingriff steht und die Stange (15) durch den Schlitz (21) durchgeht.

2. Vorrichtung nach Anspruch 1, dadurch gekennzeichnet, daß eine vorgespannte elastische Einrichtung (38) zwischen die ausziehbaren Teile eingesetzt ist.

3. Vorrichtung nach Anspruch 2, dadurch gekennzeichnet, daß die elastische Einrichtung eine zwischen zwei koaxiale zylindrische Wände (40, 41) eingesetzte Schraubenfeder (38) ist, zwischen denen das offene Ende des zweiten Teils (9B) des zylindrischen Gehäuses (9) gleitet.

4. Vorrichtung nach Anspruch 3, dadurch gekennzeichnet, daß der zweite Teil (9B) auch durch eine erste zylindrische Wand (39) des ersten Teils (9A) geführt ist.

5. Vorrichtung nach Anspruch 4, dadurch gekennzeichnet, daß die elastische Einrichtung eine zwischen dem ersten und zweiten Teil (14A, 14B) der Welle (14) angeordnete Schraubenfeder (38) ist, wobei das offene Ende des ersten Elements (9A) durch eine erste zylindrische Wand (39) geführt wird.

6. Vorrichtung nach Anspruch 1, dadurch gekennzeichnet, daß zwischen die ausziehbaren Elemente eine Rückhalteeinrichtung (42) eingesetzt ist, um ein Voneinanderlösen dieser Elemente zu verhindern, wenn sie sich in der maximalen Ausziehstellung befinden.

7. Vorrichtung nach Anspruch 1, dadurch gekennzeichnet, daß die Wand (28) an dem zylindrischen Gehäuse (9) mit einem Schnappverschluß angebracht ist.

8. Vorrichtung nach Anspruch 7, dadurch gekennzeichnet, daß das zylindrische Gehäuse (9) auf der Wand (28) mit Mitteln für dessen Befestigung an der oberen Tankwand (32) versehen ist.

## Claims

1. A device (1) for indicating the level of liquid in a tank, in particular an automobile tank, comprising:
• a casing (9) containing a vertical shaft (14), a float (16) provided with a hole, whereby said float is slidably mounted on said shaft, and a linkage (10) for converting movement of the float (16) along a vertical axis (18) into angular rotation of said shaft (14) about said vertical axis (18) ;
• an angular movement sensor (11) for emitting an electrical signal representative of said angular rotation, said sensor comprising a magnetic angular position transducer comprising a rotor (23) and a stator (24) in which the rotor (23) is moved by the linkage (10) so as to rotate about said vertical axis (18);
• a wall (28) of insulating material positioned in the air gap existing between said rotor (23) and said stator (24) , wherein said wall (28) sealingly separates the part (29) of the casing containing the linkage (10) and the rotor (23) from the part (30) containing the stator (24) and an electronic circuit (2) which processes the data received from the angular movement sensor (11) and display the results, characterised in that the casing (9) and the shaft (14) are rendered telescopic by:
• the shaft (14) comprising a first (14A) and a second (14B) part, said first part being slidable by virtue of a splined profile within the second part along the axis (18); and by
• the casing (9) comprising a first part (9A)) and a second part (9B), slidable within the first part;
• wherein said first part (9A) of the casing (9):
- houses the angular movement sensor (11), and a cup-like member (13A), which supports the rotor (23) and which is keyed to the first part (14A) of the shaft (14);
- acts as a guide element for the second part (9B) of the casing (9) which slides along the vertical axis (18),
- is securable to the upper wall of the tank (32),
• wherein said second part (9B) of the casing (9) houses:
- the second part (14B) of the shaft (14) to which are journalled both a first disc (12) and a second disc (13B) ;
the linkage (10), which comprises a rod (15) in the form of a helix about the vertical axis (18) and having its ends rigidly connected to both the first disc (12) and the second disc (13B); and
- the float (16), which is provided with a radial groove (20) and a slot (21), wherein the groove (20) is engaged by a guide (19) fixed to the second part (9B) of the casing (9) and the slot (21) is traversed by the rod (15).

2. A device as claimed in claim 1, characterised in that preloaded elastic means (38) are interposed between the telescopic parts.

3. A device as claimed in claim 2, characterised in that the elastic means are a spiral spring (38) interposed between two coaxial cylindrical walls (40, 41) between which the open end of the second part (9B) of the cylindrical casing (9) slides.

4. A device as claimed in claim 3, characterised in that the second part (9B) is also guided by a first cylindrical wall (39) of the first part (9A).

5. A device as claimed in claim 4, characterised in that the elastic means are a spiral spring (38) positioned between the first and the second parts (14A, 14B) of the shaft (14), the open end of the first element (9A) being guided by a first cylindrical wall (39).

6. A device as claimed in claim 1, characterised in that retention means (42) are interposed between the telescopic elements to act in such a manner as to prevent mutual disengagement of said elements when in the position of maximum telescopic extension.

7. A device as claimed in claim 1, characterised in that the wall (28) is snap-fitted to the cylindrical casing (9).

8. A device as claimed in claim 7, characterised in that the cylindrical casing (9) is provided on said wall (28), with means for its fixing to the tank upper wall (32).

## Revendications

1. Dispositif (1) pour indiquer le niveau d'un liquide dans un réservoir, en particulier un réservoir d'automobile, comprenant;
un boîtier (9) contenant un arbre vertical (14), un flotteur (16) pourvu d'un trou grâce auquel ledit flotteur est monté de façon coulissante sur ledit arbre, et un système de liaison (10) pour convertir le mouvement du flotteur (16) le long d'un axe vertical (18) en une rotation angulaire dudit arbre (14) autour dudit axe vertical (18);
un capteur (11) de mouvement angulaire pour émettre un signal électrique représentatif de ladite rotation angulaire, ledit capteur comprenant un dispositif magnétique transducteur de position angulaire comprenant un rotor (23) et un stator (24) dans lequel le rotor (23) est déplacé par le système de liaison (10) de manière à tourner autour dudit axe vertical (18);
une paroi (28) en matière isolante positionnée dans l'entrefer existant entre ledit rotor (23) et ledit stator (24), ladite paroi (28) séparant de façon étanche la partie (29) du boîtier, qui contient le système de liaison (10) et le rotor (23), de la partie (30) contenant le stator (24) et un circuit électronique (2) qui traite les données reçues du capteur (11) de mouvement angulaire et affiche les résultats, caractérisé en ce que le boîtier (9) et l'arbre (14) sont rendus télescopiques par le fait que:
l'arbre (14) comprend une première partie (14A) et une seconde partie (14B), ladite première partie pouvant coulisser, grâce à un profil cannelé, dans la seconde partie, le long de l'axe (18), et que
le boîtier (9) comprend une première partie (9A) et une seconde partie (9B) pouvant coulisser dans la première partie;
ladite première partie (9A) du boîtier (9):
- logeant le capteur (11) de mouvement angulaire, et un élément en forme de cuvette (13A) qui supporte le rotor (23) et qui est claveté sur la première partie (14A) de l'arbre (14);
- agissant comme un élément de guidage vis-à-vis de la seconde partie (9B) du boîtier (9) qui coulisse le long de l'axe vertical (18),
- pouvant être fixée à la paroi supérieure du réservoir (32),
ladite seconde partie (9B) du boîtier (9) logeant :
- la seconde partie (14B) de l'arbre (14) à laquelle sont fixés de façon tournante à la fois un premier disque (12) et un second disque (13B);
- le système de liaison (10), qui comprend une tige (15) ayant la forme d'une hélice autour de l'axe vertical (18) et dont les extrémités sont reliées de façon rigide à la fois au premier disque (12) et au second disque (13B); et
- le flotteur (16), qui est pourvu d'une rainure radiale (20) et d'une fente (21), la rainure (20) recevant un guide (19) fixé à la seconde partie (9B) du boîtier (9) et la fente (21) étant traversée par la barre (15).

2. Dispositif selon la revendication 1, caractérisé en ce que des moyens élastiques préchargés (38) sont interposés entre les parties télescopiques.

3. Dispositif selon la revendication 2, caractérisé en ce que les moyens élastiques sont un ressort à boudin (38) interposé entre deux parois coaxiales cylindriques (40, 41) entre lesquelles coulisse l'extrémité ouverte de la seconde partie (9B) du boîtier cylindrique (9).

4. Dispositif selon la revendication 3, caractérisé en ce que la seconde partie (9B) est aussi guidée par une première paroi cylindrique (39) de la première partie (9A).

5. Dispositif selon la revendication 4, caractérisé en ce que les moyens élastiques sont un ressort à boudin (38) positionné entre les première et seconde parties (14A, 14B) de l'arbre (14), l'extrémité ouverte du premier élément (9A) étant guidée par une première paroi cylindrique (39).

6. Dispositif selon la revendication 1, caractérisé en ce que des moyens de retenue (42) sont interposés entre les éléments télescopiques de manière à empêcher un désengagement mutuel desdits éléments quand ils sont dans la position d'extension maximale.

7. Dispositif selon la revendication 1, caractérisé en ce que la paroi (28) est enclenchée sur le boîtier cylindrique (9).

8. Dispositif selon la revendication 7, caractérisé en ce que le boîtier cylindrique (9) comporte sur ladite paroi (28) des moyens pour sa fixation à la paroi supérieure (32) du réservoir.
